# EUROPEAN PATENT SPECIFICATION

(11) **EP 1 314 357 B1**
(45) Date of publication and mention of the grant of the patent: **23.05.2007**
(21) Application number: 01127925.4
(22) Date of filing: 23.11.2001
(51) Int. Cl.: A23C 1/12, A23C 9/152

(54) **Process for the preparation of milk powders and concentrated milk products**
Verfahren zur Herstellung von Milchpulver und konzentrierten Milchprodukten
Procédé de préparation de laits en poudre et de produits laitiers concentrés

(43) Date of publication of application: 28.05.2003
(73) Proprietor: Société des Produits Nestlé S.A., 1800 Vevey (CH)
(72) Inventor: Berrocal, Rafael, CH-1806 Saint-Legier (CH)
(74) Representative: Chautard, Cécile

(56) References cited:
- EP-A- 0 627 169
- WO-A-01/11977
- GB-A- 1 266 619
- NL-A- 7 903 483
- US-A- 3 773 519
- US-A- 5 223 299
- DATABASE WPI Section Ch, Week 198750 Derwent Publications Ltd., London, GB; Class C03, AN 1987-354084 XP002198773 & SU 1 308 309 A (AS UKR THERMOPHYS), 7 May 1987 (1987-05-07)
- DATABASE WPI Section Ch, Derwent Publications Ltd., London, GB; Class A97, AN 1973-09688U XP002198792 & JP 48 005028 B (TOYO BREWING CO LTD)
- DATABASE WPI Section Ch, Week 198049 Derwent Publications Ltd., London, GB; Class D13, AN 1980-87192C XP002198793 & JP 55 135545 A (FREUND SANGYO KK), 22 October 1980 (1980-10-22)

## Description

### Background of the invention

The present invention relates to a process for the preparation of a fat-containing milk product as a liquid concentrate or as a powder.

In the preparation of milk concentrates and powders, it is economical to concentrate production in regions where fresh milk is available in great quantities and at an economic price. It is thus desirable to increase the capacity of existing installed drying equipment, particularly spray drying towers, without investing in new equipment. A means to achieve this goal would be to introduce highly concentrated milk into the drying step. The problem is that, as soon as concentrate dry matter content exceeds 50 % by weight, viscosity undergoes an exponential increase. Another problem is that in treating of highly concentrated milk a product quality deterioration occurs as a consequence of fat clustering of the highly concentrated milk mainly during homogenisation. Homogenisation cannot be omitted because of the bad solubility of powders made from non homogenised milk.

US 5223299, discloses the production of evaporated milk without stabilizing salts wherein a lactic product containing phospholipids derived from milk is mixed with a milk product, which is then heat treated and evaporatively concentrated.

SU 1308309 discloses dried whole milk substitute made by concentrating skimmed milk, adding a fatty admixture, emulsifying and drying the emulsion.

GB 1266 619 discloses powdered foodstuffs, in particular milk products in which a surface active agent is used as emulsifying and wetting agent.

US 3773519 describes a process for treating a powdered fat-containing milk product, in which a coating of lecithin is applied to powder agglomerates, in order to enhance its reconstitution properties.

J73005028 relates to blends comprising nonfat dry milk and a surfactant, e.g lecithin, fatty esters of polyoxyethylen sorbitane or faty acic esters of sugar.

J55135545 discloses a powdered milk containing sorbitan fatty acid esters of castor oil.

NL7903483 discloses a process, in which lecithin is added to concentrated milk and the mixture is dried to give milk powder.

US-A-5 518 751 is concerned with a process for the manufacture of recombined evaporated milk concentrates and milk powders comprising introducing a vegetable fat into the liquid concentrate in the course of evaporating for increasing the unsaturated fatty acid content thereof. In an embodiment for making milk powder, after introduction of the fat in the last effect of the evaporator, the mixture is homogenised before being dried.

EP-A-0 627 169 is related to a process for the manufacture of liquid evaporated milk in which the preheating and evaporation steps are within the evaporation equipment and homogenisation takes place before concentration.

EP-A-0 873 690 is concerned with a process of preparing a fat-containing foodstuff comprising adding a fat phase to an aqueous phase said adding and homogenising being located between two evaporators of a plurality of evaporator effects. The purpose of this step is to protect heat-sensitive oils. For instant milk powder it would not make sense to separate the fat from the production milk prior to evaporation.

NL-A-7903483 is concerned with a process for preparing a milk powder in which a surfactant, e.g. lecithin is introduced into the feed concentrate stream between the milk concentrate buffer tank and the atomiser of the spray drier.

### Summary of the invention

We have found that it is possible to drastically decrease the viscosity of concentrated milk and to increase productivity of manufacture of milk powder by primary spray drying fresh milk and by the way to maintain or even improve the powder quality.

The invention concerns a process for the preparation of a concentrated milk product which provides a solution to the problem of too high viscosity of prior milk concentrates. Thus the control of viscosity allows to dry a concentrate of beyond 50 % solids content by weight without adversely affecting the quality of the powder obtained after drying.

The process for the production of a concentrated milk of the invention comprises:
providing a standardised milk,
pasteurising and homogenising the standardised milk,
mixing the homogenised milk with a negatively charged or non-ionic emulsifier, homogenising the mixture,
feeding the milk into an evaporator having at least one stage to obtain a concentrate having a total solids content of at least 50 % by weight.

In an other embodiment the process of the invention comprises:
providing a standardised milk,
pasteurising the standardised milk,
feeding the pasteurised standardised milk into an evaporator having at least one stage to obtain a pre-concentrate,
homogenising the pre-concentrate,
mixing the pre-concentrate with a negatively charged or non-ionic emulsifier, homogenising the mixture,
further evaporating the mixture in an evaporator having at least one stage to obtain a concentrate having a total solids content of at least 50 % by weight.

In an embodiment for the manufacture of dried products the process comprises the further step of spray drying the concentrate.

### Detailed description of the invention

The principle behind this invention is the ability to spray dry a milk concentrate containing up to about 65 % by weight solids concentration.

According to the invention, fresh whole milk is standardised to a desired fat to solids not-fat ratio. This standardisation is carried out generally by adding the appropriate amount of skimmed milk to the fresh whole milk. This can also be done by composing suitable milk liquids from fresh whole milk, partially skimmed milk, cream, butterfat, buttermilk etc. Recombination of milk can also be carried out from milk powder, skim milk powder, butter oil or vegetable oils with the appropriate amount of water. Skimmed milk can also be used in a variant.

Depending on the quality of milk, the thus standardised milk is then optionally clarified by centrifugation, preferably after having been heated to about 40° C to about 45° C in order to obtain the best separation and cleaning efficiency during clarifying.

The milk is then pasteurised and homogenised. A negatively charged or non-ionic emulsifier able to bind proteins is added to the pasteurised milk at 60° C. The mixture maintained at around 65° C can be treated in a colloidal mill until no solid particles are visible.

The mixture is then subjected to homogenisation. Homogenisation can be carried out in one or two stages. The pressure of the first stage of the homogeniser is from about 50 to about 250 bar. Preferably, the pressure is from about 100 bar to about 200 bar. The pressure of the second stage of the homogeniser is from 0 to about 150 bar. Preferably, the pressure is from about 20 to about 60 bar. The total pressure of the homogeniser is from about 120 bar to about 300 bar. Preferably the total pressure of the homogeniser is from about 150 bar to about 250 bar.

After homogenisation the mixture preferably undergoes a heat treatment. The heat treatment can be performed in two steps as is conventional, by preheating and then heating with a suitable dwell time.

The heat-treated milk is then fed into an evaporator. Surprisingly, the addition of negatively charged or non-ionic emulsifier avoids the strong viscosity increase which occurs if one homogenises the milk at solids concentration above 50 % by weight and allows for later spray drying at a total solids content of preferably about 55 up to about 65 % by weight. Spray drying at such a high total solids content was previously impossible because the viscosity was so high that the product could not be transported.

Without willing to be bound by theory we could propose a model to explain the effect of emulsifiers on milk viscosity. Before the homogenisation and heat processes milk can be considered as a mixture of three phases: the lipid phase in the form of fat globules, the aqueous phase containing amongst others whey proteins and the colloidal phase containing micellar casein. On heating whey proteins unfold exposing their hydrophobic groups. They will interact, as does micellar casein with fat globules during homogenisation, which reduces the size of fat globules and therefore increase the interface area. The result of this hydrophobic interaction is that a protein layer coats the surface of fat globules. When this process is followed by an evaporation step, the concentration of different components of milk increases and favours associations between proteins covered fat globules themselves and also between protein covered fat globules and soluble proteins and micelles. This induces an increase in milk viscosity.

When before or during the evaporation process but after the homogenisation an emulsifier is added, its hydrophobic tail will interact with the most easily accessible components: casein micelles and whey proteins in the solution or in the layer covering the fat globules. If the emulsifier contains an acidic functional group, e.g. lecithin fractions rich in acidic phospholipids, such as phosphatidic acid or phosphatidyl inositol, which are the preferred emulsifiers used according to the invention, the new layer formed by the emulsifier on proteins or on the protein layer covering the fat globules will be only negatively charged and will result in repulsion between covered particles. As a result, viscosity decreases. This is also true to a lesser extend in the case where non-ionic emulsifiers, e.g. polyoxyethylene sorbitan derivatives, e.g. fatty esters known commercially as Tweens, are used which strongly bind hydrophobic groups of proteins.

During or after drying, in order to instantise the powder, lecithination with agglomeration of the recirculated fines can be carried out in the dryer, or lecithination can be carried out separately from the drying tower in an after-drier, e.g in a fluidised bed.

The processing of the milk powder after the atomisation step comprising after-drying, after-cooling, storage, filling into cans or boxes and gassing is then completed according to the standard known to experts in the field.

Embodiments of the invention are now described by way of example only. In the following Examples, parts and percentages are by weight unless otherwise stated.

### Example 1

250 kg of raw standardised whole milk containing 3.5 % fat and 9.3 % non-fat milk solids were pasteurised by indirect heating in a plate heat exchanger at maximum 80° C with a holding time of 50 s or less at that temperature. Following the pasteurisation the milk was two stage homogenised at 200 + 50 bar.

To the pasteurised and homogenised milk at 50° C was added 0.1 % lecithin (Chocotop 100®, fractionated liquid soybean lecithin enriched in acidic phospholipids, consisting of a mixture of triglycerides and phospho/glycolipids containing about 14 % acidic phosphatides, Lucas Meyer GmbH), based on dry matter and the mixture was homogenised in a two stage homogeniser at 100 bar in the first stage and 25 bar in the second stage.

The pasteurised liquid was then fed to the first effects of a multiple effect falling film evaporator and concentrated during 90 min to obtain a concentrated mixture of a dry matter content of 60 %. The apparent viscosity of the concentrate (as measured in-line at 54° C and an estimated shear rate of 230 s⁻¹) was 0.5 Pa.s.

It was then taken up by a high pressure pump and spray dried in a drying tower by high pressure swirl nozzles at a pressure of 140 bar and a temperature of 72° C. It was agglomerated and lecithinated to achieve instantisation, after-dried, after-cooled, filled into packs and gassed.

The powder had excellent reconstitution and physico-chemical characteristics.

### Example 2

The method of Example 1 was carried out with the difference that 0.5 % lecithin (Chocotop 100®) was added to pre-evaporated pasteurised milk concentrate of 40 % dry matter content, homogenised in two stages at 180 bar in the first stage and then 50 bar in the second stage and the liquid mixture was concentrated to 59 % dry matter. The apparent viscosity of the concentrate (as measured as indicated in Examples 6-9 below) was 0.01 Pa.s.

After spray-drying as in Example 1, the quality of the powder was comparable to that obtained in Example 1.

### Example 3

The method of Example 1 was carried out with the difference that 0.4 % lecithin (Chocotop 100®) was added to the pre-evaporated skimmed pasteurised homogenised milk pre-concentrate of 40 % dry matter content, homogenised in two stages at 180 bar in the first stage and then 50 bar in the second stage and the liquid mixture was concentrated to 59 % dry matter. The apparent viscosity of the concentrate, diluted to 40 % dry matter to facilitate measurement and measured as indicated in Examples 6-9 below, was 0.02 Pa.s.

### Examples 4-5

The method of Example 2 was carried out but with the difference that the addition to pasteurised and homogenised milk of Chocotop 100® was replaced by that of non-ionic emulsifiers such as Tween 20® (Example 4) or Tween 60® (Example 5). Following the Tween addition, 0.5 % in both cases, the enriched milks were homogenised in two stages at 180 bar in the first stage and then 50 bar in the second stage and the liquid mixtures were concentrated to 60 % dry matter. The apparent viscosity of the concentrates (measured as indicated in Examples 6-9 below) were 0.35 Pa.s for the variant enriched with Tween 20® (Example 4) and 0.25 Pa.s for that one containing Tween 60® (Example 5). By comparison a similar treated milk, but without Tween added, presented an apparent viscosity of 0.57 Pa.s.

### Examples 6-9

150, 200 or 250 mg of the various purified acidic phospholipids were separately added to 500 g samples of pasteurised and homogenised whole milk. The resulting phospholipid-enriched milk samples were heated to 60° C and homogenised at 180 bar in one stage. Following homogenisation, milk samples were concentrated to 60 % dry mater content in a rotary vacuum evaporator.

The apparent viscosity of the concentrates was measured as follows: The sample was introduced in a Dewar isothermal flask with water preheated at 55° C. The Dewar was covered with an aluminium foil. About 5 ml of sample were collected for each viscosity measurement carried out with a Haake RS 100 rheometer regulated at 45° C at shear rates from 0 to 500 s⁻¹. Measurements were repeated three times and for each measurement a fresh sample was taken from the concentrated milk stored in the Dewar. The viscosity in these samples was compared to that of a pasteurised milk concentrated to 60 % dry matter (reference).

The results are given in Table 1 below.

**Table 1**

| **Example** | **Phospholipid** | **Molar Density¹⁾** | **Viscosity at 500 s⁻¹ (Pa.s)** |
|---|---|---|---|
| 6 | Nathin 3KE²⁾ | - | 0.07 |
| 7 | 1,2-Dioleoyl-sn-glycero-3-phosphate (Na salt)³⁾⁴⁾ | 133 | 0.03 |
| 8 | 1,2-Dioleoyl-sn-glycero-3-[phospho-L-serine] (Na salt)³⁾⁵⁾ | 120 | 0.09 |
| 9 | L-α-phosphatidyl-inositol (plant)⁵⁾⁶⁾ | 113 | 0.07 |
| Reference | - | - | 0.15 |

| | | | |
|---|---|---|---|
| Legend: 1) Molar density of pure phospholipid (PL), i.e. micromol PPL/100 mg PL 2) Nathin 3KE from Stern, Germany, powered deoiled lecithin rich in acidic phospholipids, 200 mg 3) 200 mg 4) In chloroform 5) Lyophilized 6) 150 mg | | | |

The acidic phospholipids used in Examples 6 to 9 were powdered and instantised using maltodextrin and solvents. These species were supplied by Avanti Polar Lipids Inc (Birmingham, AL, USA), frozen in solid CO₂ as snow-white powders or dissolved in chloroform.

## Claims

1. A process for the production of concentrated milk, the process comprising:
providing a standardised milk,
pasteurising and homogenising the standardised milk,
mixing the homogenised milk with a negatively charged or non-ionic emulsifier, homogenising the mixture,
feeding the milk into an evaporator having at least one stage to obtain a concentrate having a total solids content of at least 50 % by weight.

2. A process according to claim 1 comprising
providing a standardised milk,
pasteurising the standardised milk,
feeding the pasteurised standardised milk into an evaporator having at least one stage to obtain a pre-concentrate,
homogenising the pre-concentrate,
mixing the homogenised pre-concentrate with a negatively charged or non-ionic emulsifier,
homogenising the mixture,
further evaporating the mixture in an evaporator having at least one stage to obtain a concentrate having a total solids content of at least 50% by weight.

3. A process according to claim 1 or 2 comprising spray drying the concentrate.

4. A process according to claim 1 or 2, in which the concentrate has a total solids content of 55 to 65% by weight.

5. A process according to claim 1 or 2, in which the standardised milk is a partly or totally skimmed milk.

6. A process according to claim 1 or 2, in which the negatively charged emulsifier is an acidic phospholipid.

7. A process according to claim 1 or 2, in which the negatively charged emulsifier is added in an amount corresponding to 0.05 to 0.5 % by weight of concentrate dry matter.

8. A process according to claim 1 or 2, in which the emulsifier is a non-ionic emulsifier.

9. A process according to claim 1 or 2, in which the non-ionic emulsifier is added in an amount corresponding to 0.05 to 0.5 % by weight of concentrate dry matter.

10. A process according to claim 1 or 2, in which the mixture of milk and emulsifier or the mixture of pre-concentrate and emulsifier is homogenised in one or two stages and the pressure of the first stage of the homogeniser is from about 50 to about 250 bar, and preferably from about 100 bar to about 200 bar.

11. A process according to claim 10, in which the pressure of the second stage of the homogeniser is up to 150 bar and preferably from about 20 to about 60 bar.

12. A process according to claim 10, in which the total pressure of the homogeniser is from about 120 bar to about 300 bar and preferably from about 150 bar to about 250 bar.

13. A process according to claim 3, in which the milk concentrate is spray dried using high pressure nozzles, preferably high pressure swirl nozzles.

14. A process according to claim 13, in which the milk concentrate is spray dried at about 140 bar.

15. A process according to claim 3, in which the spray dried milk is agglomerated and instantised by lecithination, the powder is after-dried, after-cooled, filled into packs and gassed.

16. A concentrated milk which contains added emulsifier which is a polyoxyethylene sorbitan derivative such as Tweens in an amount corresponding to 0.05 to 0.5% by weight of concentrate dry matter, having a total solids content of at least 50% by weight.

## Patentansprüche

1. Verfahren zur Herstellung von konzentrierter Milch, wobei das Verfahren umfasst:
Bereitstellen einer standardisierten Milch, Pasteurisieren und Homogenisieren der standardisierten Milch,
Vermischen der homogenisierten Milch mit einem negativ geladenen oder nicht-ionischen Emulgator, Homogenisieren der Mischung,
Einspeisen der Milch in einen Verdampfer mit wenigstens einer Stufe, um ein Konzentrat mit einem Gesamt-Feststoffgehalt von wenigstens 50 Gew.-% zu erhalten.

2. Verfahren nach Anspruch 1, das umfasst:
Bereitstellen einer standardisierten Milch, Pasteurisieren der standardisierten Milch,
Einspeisen der pasteurisierten standardisierten Milch in einen Verdampfer mit wenigstens einer Stufe, um ein Vörkonzentrat zu erhalten,
Homogenisieren des Vorkonzentrats,
Vermischen des homogenisierten Vorkonzentrats mit einem negativ geladenen oder nicht-ionischen Emulgator, Homogenisieren der Mischung,
weiteres Eindampfen der Mischung in einem Verdampfer mit wenigstens einer Stufe, um ein Konzentrat mit einem Gesamt-Feststoffgehalt von wenigstens 50 Gew.-% zu erhalten.

3. Verfahren nach Anspruch 1 oder 2, das das Sprühtrocknen des Konzentrats umfasst.

4. Verfahren nach Anspruch 1 oder 2, wobei das Konzentrat einen Gesamt-Feststoffgehalt von 55 bis 65 Gew.-% aufweist.

5. Verfahren nach Anspruch 1 oder 2, wobei die standardisierte Milch eine teilweise oder vollständig entrahmte Milch ist.

6. Verfahren nach Anspruch 1 oder 2, wobei der negativ geladene Emulgator ein saures Phospholipid ist.

7. Verfahren nach Anspruch 1 oder 2, wobei der negativ geladene Emulgator in einer Menge zugesetzt wird, die 0,05 bis 0,5 % des Gewichts der Konzentrat-Trockenmasse entspricht.

8. Verfahren nach Anspruch 1 oder 2, wobei der Emulgator ein nicht-ionischer Emulgator ist.

9. Verfahren nach Anspruch 1 oder 2, wobei der nicht-ionische Emulgator in einer Menge zugesetzt wird, die 0,05 bis 0,5 % des Gewichts der Konzentrat-Trockenmasse entspricht.

10. Verfahren nach Anspruch 1 oder 2, wobei die Mischung aus Milch und Emulgator oder die Mischung aus Vorkonzentrat und Emulgator in einer oder in zwei Stufen homogenisiert wird, und wobei der Druck der ersten Stufe des Homogenisators von etwa 50 bis etwa 250 bar, und vorzugsweise von etwa 100 bis etwa 200 bar, beträgt.

11. Verfahren nach Anspruch 10, wobei der Druck der zweiten Stufe des Homogenisators bis zu 150 bar beträgt und vorzugsweise von etwa 20 bis etwas 60 bar beträgt.

12. Verfahren nach Anspruch 10, wobei der Gesamtdruck des Homogenisators von etwa 120 bar bis etwa 300 bar und vorzugsweise von etwa 150 bis etwa 250 bar beträgt.

13. Verfahren nach Anspruch 3, wobei das Milchkonzentrat unter Verwendung von Hochdruckdüsen, vorzugsweise von Hochdruck-Verwirbelungsdüsen, sprühgetrocknet wird.

14. Verfahren nach Anspruch 13, wobei das Milchkonzentrat bei etwa 140 bar sprühgetrocknet wird.

15. Verfahren nach Anspruch 3, wobei die sprühgetrocknete Milch agglomeriert und durch Lecithinierung instantisiert wird, das Pulver nachgetrocknet wird, nachgekühlt, in Verpackungen eingefüllt und begast wird.

16. Konzentrierte Milch, die einen zugesetzten Emulgator, der ein Polyoxyethylensorbitan-Derivat wie die Tweens ist, in einer Menge enthält, die 0,05 bis 0,5 % des Gewichts der Konzentrat-Trockenmasse entspricht, wobei sie einen Gesamtfeststoffgehalt von wenigstens 50 Gew.-% aufweist.

## Revendications

1. Procédé de production de lait concentré, le procédé comprenant :
la fourniture d'un lait standardisé,
la pasteurisation et l'homogénéisation du lait standardisé,
le mélange du lait homogénéisé avec un émulsifiant chargé négativement ou non ionique,
l'homogénéisation du mélange,
l'envoi du lait dans un évaporateur ayant au moins un étage pour obtenir un concentré ayant une teneur totale en solides d'au moins 50 % en poids.

2. Procédé selon la revendication 1 comprenant
la fourniture d'un lait standardisé,
la pasteurisation du lait standardisé,
l'envoi du lait standardisé pasteurisé dans un évaporateur ayant au moins un étage pour obtenir un préconcentré,
l'homogénéisation du préconcentré,
le mélange du préconcentré homogénéisé avec un émulsifiant chargé négativement ou non ionique,
l'homogénéisation du mélange,
l'évaporation ultérieure du mélange dans un évaporateur ayant au moins un étage pour obtenir un concentré ayant une teneur totale en solides d'au moins 50 % en poids.

3. Procédé selon la revendication 1 ou 2 comprenant le séchage par atomisation du concentré.

4. Procédé selon la revendication 1 ou 2, dans lequel le concentré a une teneur totale en solides de 55 à 65 % en poids.

5. Procédé selon la revendication 1 ou 2, dans lequel le lait standardisé est un lait partiellement ou totalement écrémé.

6. Procédé selon la revendication 1 ou 2, dans lequel l'émulsifiant chargé négativement est un phospholipide acide.

7. Procédé selon la revendication 1 ou 2, dans lequel l'émulsifiant chargé négativement est ajouté en une quantité correspondant à 0,05 à 0,5 % en poids de matière sèche de concentré.

8. Procédé selon la revendication 1 ou 2, dans lequel l'émulsifiant est un émulsifiant non ionique.

9. Procédé selon la revendication 1 ou 2, dans lequel l'émulsifiant non ionique est ajouté en une quantité correspondant à 0,05 à 0,5 % en poids de matière sèche de concentré.

10. Procédé selon la revendication 1 ou 2, dans lequel le mélange de lait et d'émulsifiant ou le mélange de préconcentré et d'émulsifiant est homogénéisé dans un ou deux étages et la pression du premier étage de l'homogénéisateur est d'environ 50 à environ 250 bars, et de préférence d'environ 100 bars à environ 200 bars.

11. Procédé selon la revendication 10, dans lequel la pression du deuxième étage de l'homogénéisateur va jusqu'à 150 bars et de préférence d'environ 20 à environ 60 bars.

12. Procédé selon la revendication 10, dans lequel la pression totale de l'homogénéisateur va d'environ 120 bars à environ 300 bars et de préférence d'environ 150 bars à environ 250 bars.

13. Procédé selon la revendication 3, dans lequel le concentré de lait est séché par atomisation en utilisant des buses à haute pression, de préférence des buses à turbulence à haute pression.

14. Procédé selon la revendication 13, dans lequel le concentré de lait est séché par atomisation à environ 140 bars.

15. Procédé selon la revendication 3, dans lequel le lait séché par atomisation est aggloméré et instantanéisé par lécithination, la poudre est post-séchée, post-refroidie, versée dans des récipients et gazéifiée.

16. Lait concentré contenant l'émulsifiant ajouté qui est un dérivé de polyoxyéthylène-sorbitanne tel que le Tween en une quantité correspondant à 0,05 à 0,5 % en poids de matière sèche de concentré, ayant une teneur totale en solides d'au moins 50 % en poids.
